# EUROPÄISCHE PATENTSCHRIFT

(11) **EP 0 470 560 B1**
(45) Veröffentlichungstag und Bekanntmachung des Hinweises auf die Patenterteilung: **30.11.1994**
(21) Anmeldenummer: 91113150.6
(22) Anmeldetag: 05.08.1991
(51) Int. Cl.: E01H 1/05, A01G 1/12

(54) **Bodenbearbeitungsfahrzeug**
Floor treatment vehicle
Véhicule de traitement de sol

(30) Priorität: 06.08.1990 DE 9011447 U; 10.08.1990 DE 9011691 U
(43) Veröffentlichungstag der Anmeldung: 12.02.1992
(73) Patentinhaber: WIEDENMANN GMBH, D-89192 Rammingen (DE)
(72) Erfinder:
(74) Vertreter: Flügel, Otto, Dipl.-Ing.

(56) Entgegenhaltungen:
- DE-A- 3 604 053
- FR-A- 1 434 998
- GB-A- 110 971
- GB-A- 115 246

## Beschreibung

Die Erfindung betrifft ein selbstfahrend ausgebildetes Bodenbearbeitungsfahrzeug mit einem zweiachsigen lenkbare Vorderräder aufweisenden Fahrgestell, an dem zumindest eine Kehreinrichtung gehalten ist, wobei an dem in Fahrtrichtung nach vorn weisenden Ende eines um die Hinterachse schwenkbar gelagerten Chassisteils das in Fahrtrichtung nach hinten weisende Ende einer an der Vorderachse angeordneten Abstützung gehalten ist, so daß der vordere Teil des Chassisteils gegenüber der Vorderachse höhenverstellbar abgestützt ist, wobei an dem Chassisteil die Kehreinrichtung oder ähnliches Bodenbearbeitungsgerät mit einem chassisfest gehaltenen Kehrwalzengerät oder dergleichen und einem Aufnahmebehälter angeordnet ist, gegebenenfalls auswechselbar gegen andere chassisfest aufzusattelnde und gegebenenfalls höhenveränderlich einstellbare Geräte.

Ein solches Fahrzeug ist aus der DE-A-36 04 053 bekannt, und zwar als Flächensäuberungs-Fahrzeug mit einem zwischen den beiden Achsen des Fahrgestells angeordneten Kehrgerät und einem Frontanbaugerät, das unterschiedliche Ausbildungen aufweisen und unterschiedliche Aufgaben erfüllen kann, und dort als Beispiel genannt ein Sauggerät oder ein Blasgerät, es kommen aber auch andere Bodenbearbeitungsgeräte wie Vertikutiergeräte aller Arten in Betracht, Bodenlüfter also, und weiterhin Behandlungsgeräte für Kunstrasen und dergleichen mehr, generell Geräte also, deren Bedenbehandlung Schmutz und/oder Abfall erzeugt, der von einem Kehrgerät aufgenommen werden kann. Denkbar ist auch ein Front-Mähgerät, dem ein Sauger nachgeschaltet sein kann.

Ein wichtiges Merkmal dieses Gerätes besteht darin, daß das Kehrgerät bzw. die Kehrwalze fest am Zwischenachs-Chassis des Fahrzeugs angeordnet ist und daß der vordere Teil dieses Chassis gegenüber der Vorderachse der Laufräder des Fahrzeugs höhenverstellbar abgestützt ist, insbesondere über eine drei- oder vierarmige Parallellenkeranordnung grundsätzlich bekannter Bauart, die vorzugsweise mit Hilfe einer hydraulischen Kolben-Zylindereinrichtung und/oder einer Spindeleinrichtung betätigbar bzw. einstellbar ist; nicht alle diese Eigenschaften und Ausstattungsmöglichkeiten sind in der vorstehenden OS wörtlich aufgeführt.

Gemäß Spalte 5, Zeilen 21 bis 25 der DE-A-36 04 053 ist das bekannte Fahrzeug mit einem im vorderen Teil des Kehrgerätegehäuses untergebrachten Antriebsmotoraggregat versehen, welches dem Fahrantrieb und gegebenenfalls auch dem Antrieb weiterer, von dem Fahrzeug aufgenommener Geräte, beispielsweise der Kehreinrichtung, dient.

Der Erfindung liegt die Aufgabe zugrunde, ein Fahrzeug der eingangs genannten Art zur Verfügung zu stellen, das hinsichtlich seiner Handhabung und seines Betriebs verhaltens verbessert ist.

Diese Aufgabe wird erfindungsgemäß dadurch gelöst, daß das Fahrzeug-Antriebsmotoraggregat zwischen der Kehrwalze und der Hinterachse - gegebenenfalls in deren Nahbereich - angeordnet ist und daß das nach hinten weisende Ende der Abstützung im Nahbereich der Kehrwalze an dem Chassisteil angelenkt ist.

Besonders vorteilhaft ist an dieser Lösung, daß die Kehrwalze bei Kurvenfahrt den Vorderrädern spurgetreuer folgen kann und daß die Manövries fähigkeit verbessert ist.

In einer vorteilhaften Ausführungsform ist das Antriebsaggregat zwischen der Kehreinrichtung und der Hinterachse des Fahrzeugs derart angeordnet, daß die Abtriebswelle des Aggregates - insbesondere Achse der Kurbelwelle eines mehrzylindrigen Verbrennungsmotors - etwa senkrecht zur Bewegungsrichtung und damit Längsachse des Fahrzeugs verläuft.

Eine solche Motoranordnung ist in überraschender Vielfalt von Nutzen, und zwar sowohl was die Fahrzeugabmessung, das Fahrverhalten als auch die Bedienungsfreundlichkeit anbelangt.

Weitere bevorzugte Ausführungen der Erfindung ergeben sich aus den Unteransprüchen.

Die Motoranordnung vor der Hinterachse bzw. in deren Nahbereich als kompaktes und damit gewichtiges Aggregat führt zu einer entsprechend tiefen Lage des Fahrzeugsschwerpunktes, wodurch die Fahrsicherheit des auch bei stark hügeligem Gelände einzusetzenden Fahrzeugs verbessert wird; daneben ergibt sich insbesondere bei schweren mitgeführten Frontanbaugeräten eine günstiger ausgeglichene Gewichtsverteilung auf die Achsen. Einbauort und insbesondere Einbauanordnung des Antriebsaggregates gestatten eine geringer bemessene Gesamtlänge des Fahrzeugs in dessen Längsachse bzw. Fahrtrichtung gesehen.

Die Anordnung des Antriebsaggregates zwischen Kehrgerät und Hinterachse ermöglicht eine tiefergelegene Anordnung des Fahrersitzes und hinsichtlich der Fahrzeuglänge eine bevorzugte Fahrersitzanordnung annähernd oberhalb der Kehrwalze. Der gewonnene Freiraum im Bedienungstrakt des Fahrzeugs ermöglicht die Anordnung eines Beifahrersitzes, was je nach Ausstattung bzw. Einsatzzweck des Fahrzeugs im Sinne eines Zweimannbetriebes von Vorteil ist.

Hinsichtlich der Bedienung des Fahrzeugs von besonderer Bedeutung ist die wesentlich bessere Geräuschdämpfung des Antriebsaggregates, und zwar zunächst durch die Lage vom Fahrersitz aus gesehen hinter der Kehrwalze als auch durch die bessere Anbringungsmöglichkeit schalldämpfender Einrichtungen. Hinsichtlich des Bedienungsplatzes läßt sich damit eine überraschend und bedeutend höhere Schalldämpfung erzielen, nämlich im Bereich bis zu 15 dB gegenüber dem bisherigen Geräuschpegel von etwa 95 dB, was hier als Beispiel zu verstehen ist.

Das erfindungsgemäße Fahrzeug soll dem Anbau auch heckseitiger Aufsattelgeräte unterschiedlicher Ausbildung und Zweckbestimmung zugänglich sein. Aus diesem Gesichtspunkt ist die Anordnung des Antriebsaggregates vor bzw. im Nahbereich der Hinterachse von Vorteil, weil sich aufgrund dieser räumlichen Anordnung eine vom Antriebsaggregat aus mechanisch angetriebene Zapfwelle vorsehen läßt, die anstelle des Kehrgutbehälters aufgesattelte Bearbeitungsgeräte antreibt.

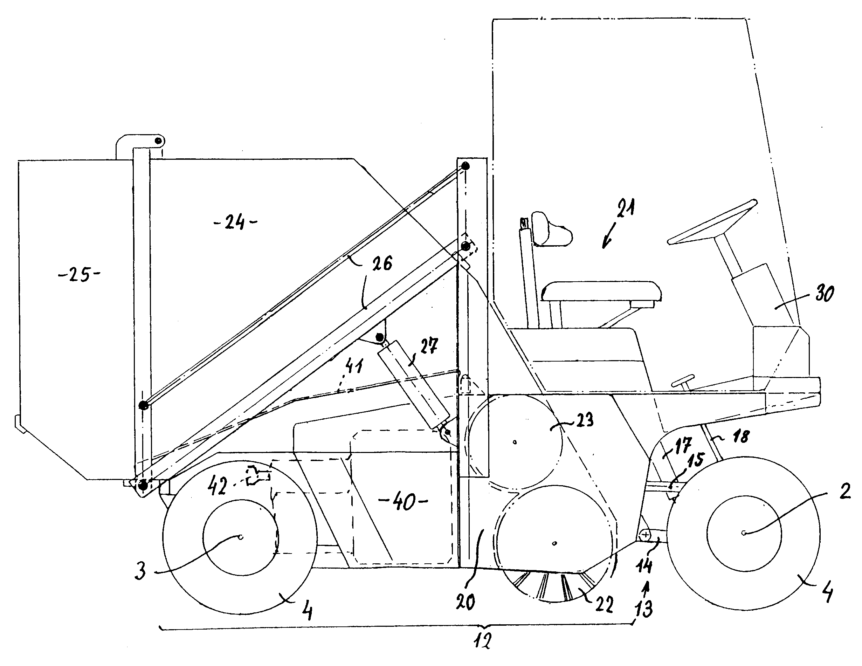

In der Zeichnung ist eine schematische, von der Funktion her bestimmte Seitenansicht eines Ausführungsbeispieles des Bodenbearbeitungsfahrzeugs wiedergegeben.

Das Ausführungsbeispiel ist mit einer Vorderachse 2 und einer Hinterachse 3 versehen, die sich im wesentlichen über die Breite des Fahrzeugchassis erstrecken und jeweils zwei Räder 4 tragen, so daß das Fahrzeug bzw. dessen Fahrgestell auch in Hanglagen kippsicher einsetzbar ist. Zugleich ist die zweirädrige Ausbildung der Vorderachse 2 damit in der Lage, in nicht dargestellter Weise ein frontseitig anzuordnendes Anbaugerät wiederum der Hanglage angepaßt auszurichten, so daß - beispielsweise bei einem Sauger, einem Vertikutierer oder dergleichen Bodenbearbeitungsgerät - eine gleichmäßige Ausrichtung zu dem zu behandelnden Boden gewährleistet ist. Hinsichtlich des Abstandes zwischen dem Anbaugerät und dem Boden kann eine höhenverstellbare bzw. höheneinstellbare Abstützung des Anbaugerätes gegenüber der Vorderachse vorgesehen sein, wie dies anhand des Saug-Blas-Gerätes in Form eines Parallellenker bzw. von Abstützrädern bei dem Flächensäuberungsfahrzeug nach der DE-A-36 04 053 vorgesehen und in deren Beschreibung näher erläutert ist.

Ein insgesamt mit 12 bezeichnetes Chassisteil zwischen der Vorderachse 2 und der Hinterachse 3 ist um letztere verschwenkbar gelagert und an der Vorderachse 2 über eine höhenveränderliche Abstützung 13 gehalten, die aus einem unteren Lenkerpaar 14 und einem oberen Lenkerpaar 15 besteht, mit ihrem vorderseitigen Gelenkenden in nicht näher dargestellter Weise an einer Traverse der Vorderachse 2 angelenkt ist und an ihren von der Vorderachse 2 abgewandten Enden gelenkig an dem Chassisteil 12 festgelegt ist. Mit Hilfe einer hydraulischen Kolben-Zylinder-Einrichtung - Arbeitszylinder - 17 läßt sich der Abstand zwischen der Vorderachse 2 und dem vorderen Bereich des Chassisteils 12 verändern, und mittels eines mechanischen
Begrenzers 18, hier in Gestalt einer Spindel, läßt sich darüber hinaus eine unabhängig von dem Arbeitszylindern 17 bestimmte Höheneinstellung fixieren.

Das Chassisteil 12, das um die Hinterachse 3 drehbar gelagert und gegenüber der Vorderachse 2 über die höhenveränderliche Abstützung 13 abgestützt ist, umfaßt ein Kehrgerätegehäuse 20, an welchem bzw. dem vorderen Bereich des Chassisteils 12 ein Fahrersitz 21 derart angeordnet ist, daß er sich in etwa vertikal oberhalb einer Kehrwalze 22 befindet, die innerhalb des Kehrgerätegehäuses 20 angeordnet und gegenüber dem Chassisteil 12 unveränderlich gelagert ist. Der Kehrwalze 22 ist eine schräg darüber angeordnete Transportwalze 23 zugeordnet, deren Funktion bekannt ist und hier nicht näher dargestellt werden muß. Der ebenfalls nicht näher dargestellte tibergang zwischen der Transportwalze 23 und dem Innenraum eines Sammelbehälters 24, 25 für das Kehrgut und gegebenenfalls für weiteres, von einem Frontanbaugerät herrührendes Gut ist im Vorderfrontbereich des vorderen Behälterteils 24 vorgesehen. Die Walzen 22 und 23 erstrecken sich in etwa über die Breite des Fahrzeugs hinweg, weshalb auch der Übergang zu dem Innenraum des vorderen Behälterteils 24 entsprechend breit gestaltet ist. Für ein von einem Frontanbaugerät verursachtes aufzunehmendes Gut kann ein weiterer Eingang oberhalb des Überganges zwischen der Transportwalze 23 und dem Innenraum des Sammelbehälters in dessen vorderen Behälterteil 24 vorgesehen sein, wie dies bei dem bekannten Fahrzeug nach der DE-A-36 04 053 vorgesehen ist.

Der rückwertige Teil des Sammelbehälters wird durch eine Falle 25 gebildet, die im oberen Bereich durch eine horizontale Gelenkachse mit den vorderen Behälterteil 24 verbunden ist.

Der gesamte Sammelbehälter 24, 25 ist mit Hilfe einer Parallellenker-Anordnung 26 und einer an dieser angreifenden Kolben-Zylinder-Anordnung 27 heb- und senkbar geführt, wobei die Verbindung zu dem Kehrgerät 22, 23 und gegebenenfalls einem weiteren Eingang für aufzunehmendes Gut sich in der unteren Absenkstellung des Behälters 24, 25 selbsttätig einstellt und bei Anheben entsprechend trennt. Die Falle 25 kann mit Hilfe einer Kolben-Zylinder-Einrichtung nicht dargestellter Art gegenüber dem vorderen Behälterteil 24 zum Zwecke der Entleerung des Behälters abgeschwenkt werden.

Die Halterung des Sammelbehälters 24, 25 an einem chassisfesten Abstützteil stellt sicher, daß die Füllung des Sammelbehälters bei dessen entsprechender Anhebung über die Parallellenker-Anordnung 26 und das Öffnen der Falle 25 auf die Ladefläche eines LKW oder dergleichen abgelegene Ablagefläche ausgeleert werden kann.

An dem Chassisteil 12 ist eine Lenk- und Steuereinrichtung 30 vorgesehen, die aufgrund der höhenveränderlichen Abstützung 13 immer in fester Ralation zu dem Fahrersitz 21 bleibt.

Anders als bei dem bekannten Fahrzeug nach der DE-OS 36 04 053 ist das Antriebsmotoraggregat 40, bestehend aus Motor, Getriebe, Kupplung, Kühler und dergleichen, zwischen der Hinterachse 3 und der Kehrwalze 22 des Fahrzeugs angeordnet, und zwar hinsichtlich der Kurbelwelle senkrecht zur Fahrtrichtung verlaufend. Zu diesem Zwecke ist der Abstand zwischen der Hinterachse 3 und der Kehrwalze 22 vergrößert und derjenige zwischen der Kehrwalze und der Vorderachse 2 verringert. Damit erhält man den zusätzlichen Vorteil, daß die Kehrwalze bei Kurvenfahrt den Vorderrädern spurgetreuer folgen kann. In dem durch den größeren Abstand zwischen der Hinterachse 3 und der Kehrbürste 22 gewonnenen Raum ist mit quergestellter Abtriebswelle genügend Platz für ein den Bedürfnissen entsprechend großes Motoraggregat nebst Zusatzgeräten geschaffen. Darüber hinaus ist der Boden 41 des vorderen Behälterteils 24 weniger steil bzw. gestuft nach hinten ab fallend ausgeführt, wodurch ebenfalls viel Raum für ein Motoraggregat und eine Schallisolierung für dieses gewonnen ist. In den Seitenbereichen des Fahrzeugs, die sich an das Kehrgerätgehäuse nach hinten anschließen, lassen sich Belüftungsöffnungen für das Motoraggregat vorsehen, ähnliches gilt für den Bereich der Seitenwandung des vorderen Sammelbehälterteils 24, der nach unten hin über dessen Boden 41 hinausreicht.

Neben der besseren Spurführung der Kehrwalze 22 bei Kurvenfahrten lassen sich durch diese Motoranordnung alle die Vorteile erreichen, die in der Beschreibungseinleitung bereits angesprochen worden sind.

## Patentansprüche

1. Selbstfahrend ausgebildetes Bodenbearbeitungsfahrzeug mit einem zweiachsigen lenkbare Vorderräder aufweisenden Fahrgestell, an dem zumindest eine Kehreinrichtung gehalten ist, wobei an dem in Fahrtrichtung nach vom weisenden Ende eines um die Hinterachse (3) schwenkbar gelagerten Chassisteils (12) das in Fahrtrichtung nach hinten weisende Ende einer an der Vorderachse (2) angeordneten Abstützung (13) gehalten ist, so daß der vordere Teil des Chassisteils (12) gegenüber der Vorderachse (2) höhenverstellbar abgestützt ist, wobei an dem Chassisteil (12) die Kehreinrichtung oder ahnliches Bodenbearbeitungsgerät mit einem chassisfest gehaltenen Kehrwalzengerät oder dergleichen und einem Aufnahmebehälter angeordnet ist, gegebenenfalls auswechselbar gegen andere chassisfest aufzusattelnde und gegebenenfalls höhenveränderlich einstellbare Geräte,
**dadurch gekennzeichnet**,
daß das Fahrzeug-Antriebsmotoraggregat (40) zwischen der Kehrwalze (22) und der Hinterachse (3) - gegebenenfalls in deren Nahbereich - angeordnet ist und daß das nach hinten weisende Ende der Abstützung (13) im Nahbereich der Kehrwalze (22) an dem Chassisteil (12) angelenkt ist.

2. Fahrzeug nach Anspruch 1,
**dadurch gekennzeichnet**,
daß das Antriebsmotoraggregat mit etwa senkrecht zur Fahrtrichtung und etwa horizontal verlaufender Antriebsachse an dem Chassis angeordnet ist.

3. Fahrzeug nach Anspruch 1 oder 2,
**dadurch gekennzeichnet**,
daß im Abtriebsteil des Antriebsmotoraggregates (40) eine - insbesondere in Rückfahrtrichtung abragende - Zapfwelle (42) vorgesehen ist.

4. Fahrzeug nach einem der Ansprüche 1 bis 3,
**dadurch gekennzeichnet**,
daß der Aufnahmebehälter zumindest in einem in Fahrtrichtung vorderen Behälterteil (24) mit einem in Rückfahrtrichtung gestuft progressiv gegen die Fahrbahnebene hin schräg abfallend ausgebildeten Behälterboden (41) versehen ist.

5. Fahrzeug nach einem der Ansprüche 1 bis 4,
**dadurch gekennzeichnet**,
daß die höhenverstellbare Abstützung (13) des Chassisteils (12) als Parallellenker - insbesondere vierteilig aus zwei Lenkerpaaren (14, 15) - ausgebildet ist und daß ein für die Höhenverstellung vorgesehener hydraulischer Arbeitszylinder (17) zwischen einer Traverse für die Lagerung der Vorderachse (2) und einem nach vom hin verlängerten Bereich des Chssisteils (12) angeordnet ist.

6. Fahrzeug nach einem der Ansprüche 1 bis 5,
**dadurch gekennzeichnet**,
daß ein Fahrersitz (21) etwa vertikal über der Kehrwalze (22) angeordnet ist.

7. Fahrzeug nach einem der Ansprüche 1 bis 6,
**dadurch gekennzeichnet**,
daß der Fahrersitz 21 und eine Lenk- und Steuereinrichtung 30 in einem vorderen Bereich des Chassisteils (12) einander ortsfest zugeordnet vorgesehen sind.

## Claims

1. A self-driving floor treatment vehicle comprising a biaxial chassis which has two steerable front wheels and on which there is mounted at least one sweeping device, the rear end (with respect to the direction of travel) of a support (13) arranged on the front axle (2) being mounted on the front end (with respect to the direction of travel) of a part of the chassis (12) pivotally mounted about the rear axle (3), so that the front section of the chassis part (12) is supported so as to be vertically adjustable with respect to the front axle (2), the sweeping device or similar floor treatment appliance, comprising a sweeper roll device or the like fixedly mounted on the chassis and a receiving container, being arranged on the chassis part (12), which device may, if necessary, be exchanged for other optionally vertically adjustable appliances to be fixedly mounted to the chassis, characterised in that the drive motor unit (40) of the vehicle is arranged between the sweeper roll (22) and the rear axle (23), optionally in the vicinity thereof, and that the rear end of the support (13) is hinged to the chassis part (12) in the vicinity of the sweeper roll (22).

2. A vehicle according to claim 1, characterised in that the drive motor unit is arranged on the chassis, its driving shaft extending substantially horizontally and substantially at right angles to the direction of travel.

3. A vehicle according to claim 1 or 2, characterised in that a power take-off shaft (42) projecting in particular in the reverse travel direction, is provided in the driven part of the drive motor unit (40).

4. A vehicle according to any one of claims 1 to 3, characterised in that the receiving container is provided, at least in one container part (24) positioned in front in the direction of travel, with a container bottom (41) which is progressively stepped in the direction of reverse travel and slopes downwardly towards the plane of the track.

5. A vehicle according to any one of claims 1 to 4, characterised in that the vertically adjustable support (13) of the chassis part (12) is in the form of parallel steering bars more particularly four steering bars which form two pairs thereof (14,15), and in that a hydraulic working cylinder (17) provided for the height adjustment is arranged between a tie rod for the mounting of the front axle (2) and a forwardly extended region of the chassis part (9).

6. A vehicle according to any one of claims 1 to 5, characterised in that a driver seat (21) is arranged substantially vertically above the sweeper roll (22).

7. A vehicle according to any one of claims 1 to 6, characterised in that the driver seat (21) and a steering and control device (30) are arranged in the front region of the chassis part (12) so as to be fixedly associated with one another.

## Revendications

1. Véhicule automobile de traitement du sol, à roues avant directrices, comportant un châssis à deux essieux portant au moins un dispositif de balayage, dans lequel l'extrémité avant d'une partie (12) de châssis pouvant basculer autour de l'essieu arrière (3) est montée sur l'extrémité arrière d'un support (13), fixé sur l'essieu avant (2), de sorte que l'avant de la partie (12) basculante du châssis a sa hauteur réglable par rapport à l'essieu avant (2), cette partie basculante (12) portant le dispositif de balayage ou un appareil analogue de traitement de sol ainsi qu'une benne collectrice, avec le cas échéant possibilité d'échange contre d'autres appareils fixables au châssis et éventuellement réglables en hauteur, caractérisé en ce que le groupe moteur (40) du véhicule est placé entre le rouleau de balayage (22) et l'essieu arrière (3), le cas échéant près de celui-ci, et que l'extrémité arrière du support (13) est articulée à la partie (12) du châssis, près du rouleau de balayage (22).

2. Véhicule selon la revendication 1, caractérisé en ce que le groupe moteur est monté sensiblement en position transversale sur le châssis, avec son arbre de sortie horizontal.

3. Véhicule selon la revendication 1 ou 2, caractérisé, du côté sortie du groupe moteur (40), il est prévu une prise de force constituée par un arbre (42) dépassant notamment vers l'arrière.

4. Véhicule selon une des revendications 1 à 3, caractérisé en ce que la benne collectrice comporte au moins une partie avant (24) dont le fond (41) descend vers l'arrière, progressivement par étages en se rapprochant de la surface de roulement.

5. Véhicule selon une des revendications 1 à 4, caractérisé en ce que le support (13), réglable en hauteur, de la partie de châssis (12) est du type à parallélogramme comportant notamment deux paires de bielles (14, 15) le réglage de la hauteur étant assuré par un vérin hydraulique (17) monté entre une traverse servant de palier sur l'essieu avant (2) et un prolongement vers l'avant de la partie de châssis (12).

6. Véhicule selon une des revendications 1 à 5, caractérisé en ce qu'un siège de conducteur (21) est monté sensiblement à la verticale du rouleau de balayage (22).

7. Véhicule selon une des revendications 1 à 6, caractérisé en ce que le siège de conducteur (21) et un dispositif de commande et de conduite (30) sont montés à l'avant de la partie de châssis (12), dans des positions relatives fixes.
